# EUROPÄISCHE PATENTSCHRIFT

(11) **EP 3 180 535 B1**
(45) Veröffentlichungstag und Bekanntmachung des Hinweises auf die Patenterteilung: **30.09.2020**
(21) Anmeldenummer: 15742304.7
(22) Anmeldetag: 29.07.2015
(51) Int. Cl.: F16D 51/00

(54) **BREMSVORRICHTUNG**
BRAKE DEVICE
SYSTÈME DE FREINAGE

(30) Priorität: 14.08.2014 DE 102014216207
(43) Veröffentlichungstag der Anmeldung: 21.06.2017
(73) Patentinhaber: SAF-HOLLAND GmbH, 63856 Bessenbach (DE)
(72) Erfinder: HOCK, Helmut, 63856 Bessenbach (DE)
(74) Vertreter: Müller Schupfner & Partner Patent- und Rechtsanwaltspartnerschaft mbB
(86) Internationale Anmeldenummer: PCT/EP2015/067334
(87) Internationale Veröffentlichungsnummer: WO 2016/023750

(56) Entgegenhaltungen:
- DE-A1- 3 705 008
- GB-A- 1 454 881
- US-A- 3 626 228
- US-A- 5 451 868
- US-A1- 2001 052 258

## Beschreibung

Die Erfindung betrifft eine Bremsvorrichtung zum Bremsen eines Rades, insbesondere eine Trommelbremse.

Bremsvorrichtungen zum Bremsen des Rades eines Fahrzeugs, insbesondere eines Nutzfahrzeugs, sind im Stand der Technik hinlänglich bekannt. Trommelbremsen umfassen eine Bremstrommel, die sich zusammen mit dem zu bremsenden Rad dreht, sowie einen Bremsbelagträger, welcher mit einem Bremsbelag belegbar ist und bei Betätigung der Bremse gegen die Bremstrommel gedrückt wird. Der Bremsbelagträger ist schwenkbar an einem Bremsträger gelagert und wird mittels einer Aktuatoreinheit, beispielsweise einem Spreizkeil, radial nach außen verlagert und gegen die Innenfläche der rotierenden Bremstrommel gedrückt.

Insbesondere im Hinblick auf die Überwachung des Bewegungszustands des Fahrzeugs umfassen Bremsvorrichtungen der genannten Art häufig einen Sensor zum Aufnehmen bzw. Messen der Drehgeschwindigkeit des Rades bzw. der Bremstrommel. Der Sensor kann insbesondere im Zusammenhang mit einem Antiblockiersystem Anwendung finden. Eine bekannte Ausführung umfasst einen Sensor, welcher ortsfest am Bremsträger gelagert ist, und ein Polrad, das sich zusammen mit der Bremstrommel dreht. Der Sensor umfasst optische Sensormittel zur Bestimmung der Drehgeschwindigkeit des Polrades relativ zum Sensor.

Wenn der Sensor nicht positionsgenau in der vorgesehenen Position angeordnet ist, kann es zu Störungen bei der Messung der Drehgeschwindigkeit kommen.

Üblicherweise wird bei einer solchen Verschiebung des Sensors eine Fehlermeldung (sogenannter ABV-Fehler) ausgelöst. In diesem Fall ist es erforderlich, die Bremstrommel bzw. die Radnabe zu demontieren und den Sensor wieder in die vorgesehene Position zu verlagern. Insbesondere aufgrund der erforderlichen Demontage der Bremsvorrichtung ist dieses Vorgehen aufwendig und somit kostenintensiv.

Die US-3,626,228 betrifft eine Bremsvorrichtung zum Bremsen eines Rades mit einer Bremstrommel und einem Bremsträger, wobei ein Sensor zum Erfassen der Rotationsgeschwindigkeit des Rades vorgesehen ist, der über eine Schraube an dem Bremsträger befestigt ist.

Die US-2001/0052258 A1 betrifft eine Anordnung eines Sensors zur Erfassung der Rotationsgeschwindigkeit eines Rades an einer hohlen Achse, welche mit Druckluft beaufschlagbar ist, um den Reifen eines Fahrzeugs mit Luft zu befüllen.

Der Erfindung liegt die Aufgabe zugrunde, eine Bremsvorrichtung anzugeben, welche ein schnelles und einfaches Justieren eines Sensors, insbesondere eines ABV-Sensors, ermöglicht.

Die Aufgabe wird erfindungsgemäß durch eine Bremsvorrichtung mit den Merkmalen des Anspruchs 1 gelöst. Bevorzugte Ausgestaltungen der Erfindung sind in den abhängigen Ansprüchen sowie der nachfolgenden Beschreibung angegeben.

Die Bremsvorrichtung umfasst erfindungsgemäß eine Bremstrommel, einen Bremsträger zum Verlagern eines Bremsbelages zum Andrücken des Bremsbelages gegen die Bremstrommel, und einen Sensor zum Aufnehmen der Rotations- bzw. Drehgeschwindigkeit des Rades. Erfindungsgemäß ist ein Stellelement vorgesehen, welches mit dem Sensor koppelbar bzw. im Eingriff bringbar ist und mittels welchem der Sensor räumlich verlagerbar bzw. verstellbar ist. Ein Grundgedanke der Erfindung kann darin gesehen werden, den Sensor, insbesondere das Gehäuse des Sensors, mit einem mechanischen Stellelement zu koppeln, so dass durch eine mechanische Betätigung oder Verlagerung des Stellelements der Sensor verlagerbar ist. Dabei ist insbesondere vorgesehen, dass der Sensor mittels des Stellelements, oder Übertragungselements, in Richtung zu einem Polrad andrückbar ist. Das Stellelement ermöglicht vorzugsweise die Übertragung einer Druckkraft auf den Sensor, so dass der Sensor durch eine über das Stellelement übertragene Druckkraft gedrückt und dadurch bewegt werden kann. Das Stellelement ist vorzugsweise starr, so dass eine Druckkraft vom zweiten Ende auf das erste Ende übertragbar ist. Vorzugsweise weist das Stellelement ein erstes Ende auf, welches mit dem Sensor gekoppelt ist, sowie ein zweites Ende, das manuell oder durch ein Werkzeug betätigbar ist. Das Stellelement kann insbesondere ohne oder ohne wesentliche Formänderung durch eine auf das zweite Ende aufgebrachte Druckkraft insgesamt verlagerbar sein. Durch das Stellelement, oder Übertragungselement, ist es möglich, den Sensor ohne Demontage der Achsvorrichtung in seine vorgesehene Position zurückzuschieben bzw. zu verlagern, nachdem dieser sich gegebenenfalls, beispielsweise aufgrund von Vibrationen am Fahrzeug, vom Polrad wegbewegt hat.

Das Stellelement ist bevorzugt von außerhalb der Bremstrommel zugänglich. Insbesondere kann das Stellelement bei montierter Bremsvorrichtung derart zugänglich sein, dass der Sensor mittels des Stellelement räumlich verstellbar ist.

GErfindungsgemäß ist das Stellelement hohlzylinder- bzw. hülsenförmig ausgebildet. Dabei nimmt das Stellelement ein Kabelelement des Sensors auf. Das Kabelelement des Sensors verläuft dabei bevorzugt innerhalb des Stellelements. Besonders bevorzugt ist es, dass das Kabelelement zusammen mit dem Stellelement aus der Bremsvorrichtung bzw. der Bremstrommel herausausgeführt ist. Bei dem Kabelelement kann es sich insbesondere um ein elektrisch leitfähiges Kabel bzw. einen Kabeldraht handeln.

Gemäß einer weiteren bevorzugten Ausführungsform ist vorgesehen, dass das Stellelement einen integralen Teil einer Kabelhülse bildet. Das insbesondere elektrische Kabelelement, beispielsweise zur Verbindung des Sensors mit einer Signalverarbeitungseinheit, verläuft innerhalb der Kabelhülse, welche derart starr gestaltet ist, dass Druckkräfte von einem Ende auf das an den Sensor angrenzende Ende übertragen werden können. Somit kann das durch die Kabelhülse und das darin verlaufende Kabelelement gebildete Kabel an seinem dem Sensor gegenüberliegenden Ende gedrückt und somit der Sensor verlagert werden. Das Stellelement kann demzufolge auch als formstabile oder steife, Druckkräfte übertragende Kabelhülse bezeichnet werden.

Eine weitere bevorzugte Ausführungsform der Erfindung sieht vor, dass das Stellelement eine Länge aufweist, welche mindestens einem Abstand des Sensors von einer Außenseite der Bremsvorrichtung entspricht. Das Stellelement verläuft vorzugsweise zwischen dem Sensor und einer Außenseite der Bremsvorrichtung. Auf diese Weise ist das Stellelement auch bei montierter Bremsvorrichtung zugänglich.

Besonders bevorzugt ist es, dass das Stellelement aus einem Innenraum der Bremstrommel herausragt. Vorzugsweise verläuft das Stellelement abschnittsweise durch einen Innenraum der Bremsvorrichtung bzw. der Bremstrommel und aus dem Innenraum der Bremsvorrichtung bzw. der Bremstrommel heraus.

In einer weiteren bevorzugten Ausführungsform ist das Stellelement in einer Öffnung einer Verschlussplatte der Bremsvorrichtung gelagert und/oder durchragt diese. Bei der Verschlussplatte kann es sich insbesondere um ein Element handeln, welches einen Innenraum der Bremstrommel begrenzt und beispielsweise vor Verschmutzung schützt. Die Verschlussplatte ist vorzugsweise an einem offenen, axialen Ende der Bremstrommel angeordnet. Dabei kann es sich um ein stationäres Element handeln, das integral mit dem Bremsträger ausgebildet sein kann. Die Bremstrommel kann dabei drehbar relativ zu der Verschlussplatte ausgebildet sein.

Das Stellelement kann beispielsweise aus Metall und/oder Kunststoff gebildet sein. Entscheidend ist, dass das Stellelement eine Härte bzw. Steifigkeit aufweist, die eine Verlagerung des Sensors über das Stellelement erlaubt. Im Gegensatz zu üblichen Kabelhülsen ist das Stellelement also nicht beliebig flexibel, sondern zumindest weitgehend formstabil. Als Kunststoff ist insbesondere ein HartKunststoff bevorzugt.

Eine gute Betätigung des Stellelements lässt sich erreichen, wenn das Stellelement eine Längsachse aufweist, welche entlang einer Sensorlängsachse verläuft. Das Stellelement ist also vorzugsweise zur Längsachse des Sensors ausgerichtet. Vorzugsweise verläuft das im wesentlichen längliche und/oder erfindungsgemäß rotationssymmetrische Stellelement koaxial zur Sensorlängsachse, wobei die Längsachse des Sensors im Falle eines optischen Sensors beispielsweise in Richtung des Strahlengangs der ausgesandten Strahlen verläuft.

Es ist bevorzugt, dass der Sensor axial in eine Sensorhalterung einsteckbar ist. Die Erfindung ermöglicht dann ein Nachdrücken bzw. Verlagern des Sensors in die Sensorhalterung mittels des Stellelements, falls der Sensor sich teilweise aus der Sensorhalterung gelöst oder innerhalb dieser verlagert hat.

Besonders bevorzugt ist es, dass der Sensor mittels des Stellelements in einer Axialrichtung, also in Richtung der Längsachse des Sensors, verstellbar ist. Auf diese Weise ist keine Kraftumlenkung erforderlich. Der Sensor kann besonders einfach durch einen Druck in Axialrichtung auf das Stellelement in die Sensorhalterung eingeschoben oder zurückgeschoben werden.

Hierbei ist es von besonderem Vorteil, wenn das Stellelement entlang der Axialrichtung und/oder entlang der Richtung der Längsachse des Sensors verlagerbar ist.

Zweckmäßig ist es, wenn das Stellelement, vorzugsweise im Bereich seines zweiten Endes und insbesondere im Bereich eines aus der Verschlußplatte herausragenden Teils, Indikatormittel, wie eine Markierung, aufweist, mittels welcher die Position bzw. Lage des Stellelements im eingebauten Zustand erkennbar ist. Somit kann zweckmöglicherweise visuell angezeigt werden, ob sich der Sensor bzw. das Stellelement in der Fehlerposition oder in der Betriebsposition befindet.

Die Erfindung wird nachfolgend anhand einer bevorzugten Ausführungsform, welche in der beiliegenden Figur schematisch dargestellt ist, weiter beschrieben.

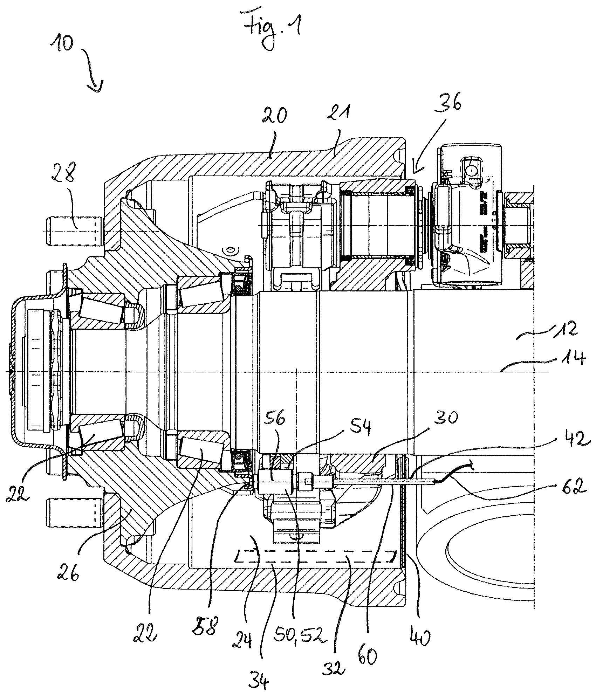

Die einzige
- Fig. 1: zeigt eine Querschnittansicht einer erfindungsgemäßen Bremsvorrichtung.

Die Bremsvorrichtung 10 umfasst eine Bremstrommel 20, welche an einem Achselement 12 drehbar gelagert ist. Das Achselement 12 erstreckt sich entlang einer Längsachse, die in der Figur mit dem Bezugszeichen 14 gekennzeichnet ist. Bei dem Achselement 12 kann es sich beispielsweise um eine feststehende, also nicht rotierende, Achse eines Fahrzeugs, insbesondere eines Nutzungsfahrzeugs, handeln.

Zur drehenden Lagerung der Bremstrommel 20 relativ zum Achselement 12 sind Lagereinrichtungen 22, beispielsweise Wälzläger, vorgesehen. An den Lagereinrichtungen 22 ist eine Radnabe 26 drehbar relativ zum Achselement 12 gelagert. Die Bremstrommel 20 ist mit der Radnabe 26 fest verbunden, so dass sie gemeinsam mit der Radnabe 26 um das Achselement 12 rotierbar ist. Zur drehfesten Verbindung von Radnabe 26 und Bremstrommel 20 sind Befestigungsbolzen 28 vorgesehen. Anstelle der Bolzen 28 können jedoch auch andere Befestigungseinrichtungen vorgesehen sein.

Die Bremstrommel 20 ist trommelförmig geformt und umfasst einen Trommelring 21, der sich in Achsrichtung und in Umfangsrichtung um das Achselement 12 erstreckt und einen Trommelinnenraum 24 umgibt, oder umgrenzt.

In dem Trommelinnenraum 24, also innerhalb der Bremstrommel 20, ist ein Bremsträger 30 angeordnet, der fest mit dem Achselement 12 verbunden ist. Der Bremsträger 30 trägt einen Bremsbelagträger 32, welcher in der Schnittansicht nicht sichtbar und nur schematisch angedeutet ist. Der Bremsbelagträger 32 ist an seiner radial außen liegenden Fläche mit ebenfalls nur schematisch angedeuteten Bremsbelägen 34 belegt, welche bei Betätigung der Bremsvorrichtung 10 an eine innen liegende Umfangsfläche der Bremstrommel 20 andrücken. Zur radialen Verlagerung des Bremsbelagträgers 32 ist eine Betätigungseinrichtung 36 vorgesehen, beispielsweise eine Spreizkeileinheit. Die Betätigungseinrichtung 36 ist üblicherweise hydraulisch betreibbar und kann hierzu einen Hydraulikzylinder aufweisen.

Der Trommelinnenraum 24 ist, insbesondere zum Schutz vor einer Verschmutzung, durch eine Verschlussplatte 40 verschlossen, welche nichtrotierend an dem Achselement 12 angeordnet ist. Die Verschlussplatte 40 befindet sich an einer axialen Stirnfläche des Trommelinnenraums 24, welche in montiertem Zustand der Bremsvorrichtung 10 der Fahrzeugmitte zugewandt ist. Die Verschlussplatte 14 kann als Teil des Bremsträgers 30 angesehen werden und integral mit diesem, beispielsweise als Gussteil, ausgeführt sein. Die Verschlussplatte 40 befindet sich insbesondere an einem offenen Ende der Bremstrommel 20.

An den sich drehenden Komponenten der Bremsvorrichtung 10, insbesondere an der Radnabe 26, ist ein Polrad 58 angeordnet. Das Polrad 58 ist drehbar relativ zum Achselement 12 gelagert und dreht sich zusammen mit der Bremstrommel 20 bzw. der Radnabe 26. Es umfasst in grundsätzlich bekannter Weise eine Mehrzahl von Stegen und Öffnungen in Umfangsrichtung, die mittels eines Sensors 50, insbesondere eines optischen Sensors, detektierbar sind. Der Sensor 50 ist hierzu positionsfest relativ zum Achselement 12 angeordnet und beispielsweise an dem Bremsträger 30 befestigt. Bei einer Drehung der Bremstrommel 20 um das Achselement 12 kann der Sensor 50 die Drehgeschwindigkeit in grundsätzlich bekannter Weise ermitteln, indem die Geschwindigkeit der an dem Sensor 50 vorbeilaufenden Gitterstäbe und/oder Öffnungen des Polrades 58 gemessen wird. Der Sensor 50 umfasst ein Sensorgehäuse 52, das in einer Sensorhalterung 54 aufgenommen ist. Eine Längsachse oder Mittelachse des Sensors 50, welche als Sensorlängsachse 56 bezeichnet wird, verläuft in Axialrichtung des Achselements 12, insbesondere parallel zur Längsachse 14. Der Sensor 50 ist entlang der Sensorlängsachse 56 in die Sensorhalterung 54 einsteckbar und bis zu einem Anschlag andrückbar. Die in Fig. 1 dargestellte Position des Sensors 50 wird als Betriebsposition bezeichnet. In dieser Position ist eine Messung der Drehgeschwindigkeit des Rades bzw. der Bremstrommel 20 um das Achselement 12 möglich.

Durch eine ungewollte Verlagerung des Sensors 50 vom Polrad 58 weg, also in der Fig. 1 nach rechts, kann eine Funktionsstörung auftreten, so dass eine Messung der Drehgeschwindigkeit nicht mehr möglich ist. Diese Position wird als Fehlerposition bezeichnet. Zum Bewegen des Sensors 50 von seiner Fehlerposition zur Betriebsposition ist ein Stellelement 60 vorgesehen, das mit dem Sensor 50, insbesondere dem Sensorgehäuse 52, verbunden bzw. in Eingriff bringbar ist. Das Stellelement 60 verläuft ausgehend von dem im Trommelinnenraum 24 angeordneten Sensor 50 aus dem Trommelinnenraum 24 heraus. Dabei erstreckt es sich durch die Verschlussplatte 40, in welcher zu diesem Zweck eine Öffnung 42 ausgebildet ist. Das Stellelement 60 ist hülsenförmig oder stangenförmig ausgebildet und insbesondere ein längliches Element, welches sich in Axialrichtung der Bremsvorrichtung 10, vorzugsweise parallel zur Längsachse 14 erstreckt. In dem Stellelement 40 verläuft bevorzugt ein elektrisches oder optisches Kabelelement 62, so dass das Stellelement 60 eine Umhüllung des Kabelelements 62 bildet. Das Kabelelement 62 kann aus dem Stellelement 60 an dem dem Sensor 50 gegenüberliegenden Ende herausragen. Damit der Sensor 50 über das Stellelement 60 zum Polrad 58 hin angedrückt werden kann, ist das Stellelement 60 steif bzw. starr gestaltet und verläuft vorzugsweise entlang einer gerade Linie, insbesondere koaxial zur Sensorlängsachse 56. Das Stellelement 60 ist bei montierter Bremsvorrichtung 10 zugänglich, insbesondere von außerhalb der den Trommelinnenraum 24 verschließenden Verschlussplatte 40. Hierzu weist das Stellelement vorzugsweise eine Länge auf, die größer ist als der Abstand des Sensors 50 von einer axialen Begrenzung des Trommelinnenraums 54, insbesondere der Verschlussplatte 40.

Besonders bevorzugt ist es, wenn das Stellelement 60 durch die Verschlussplatte 40 hindurchragt und mindestens 5 - 15 mm aus dieser herausragt. Dies gewährleistet eine zuverlässige Betätigung und gegebenenfalls auch einen visuelle Kontrolle von außerhalb der durch die Bremstrommel 20 und/oder die Verschlussplatte 40 begrenzten Bremsvorrichtung 10. Das Stellelement 60 kann auch als steife oder starre Kabelhülse oder Zusatzhülse oder als eine formstabile bzw. zusätzliche Kabelverstärkung bezeichnet werden. Mit der zusätzlichen Hülse bzw. Kabelverstärkung kann ein durch eine Verschiebung des Sensors 50 hervorgerufener Fehler (ABV-Fehler) ohne Demontage von Anbauteilen behoben werden.

### Bezugszeichenliste

- 10: Bremsvorrichtung
- 12: Achselement
- 14: Längsachse
- 20: Bremstrommel
- 21: Trommelring
- 22: Lagereinrichtung
- 24: Trommelinnenraum
- 26: Radnabe
- 28: Befestigungsbolzen
- 30: Bremsträger
- 32: Bremsbelagträger
- 34: Bremsbelag
- 36: Betätigungseinrichtung
- 40: Verschlussplatte
- 42: Öffnung
- 50: Sensor
- 52: Sensorgehäuse
- 54: Sensorhalterung
- 56: Sensorlängsachse
- 58: Polrad
- 60: Stellelement
- 62: Kabelelement

## Patentansprüche

1. Bremsvorrichtung zum Bremsen eines Rades, aufweisend,
eine Bremstrommel (20),
einen Bremsträger (30) zum Verlagern eines Bremsbelages (34) bezüglich der Bremstrommel (20), und
einen Sensor (50) zum Erfassen einer Rotationsgeschwindigkeit des Rades, wobei ein Stellelement (60) vorgesehen ist, welches mit dem Sensor (50) im Eingriff bringbar ist und mittels welchem der Sensor (50) räumlich verlagerbar ist, **dadurch gekennzeichnet, dass**
das Stellelement (60) hülsenförmig ausgebildet ist und ein Kabelelement (62) des Sensors (50) aufnimmt,
wobei das rotationssymmetrische Stellelement koaxial zu einer Sensorlängsachse verläuft.

2. Bremsvorrichtung nach Anspruch 1,
wobei das Stellelement (60) ausgelegt ist, eine Druckkraft auf den Sensor (50) zu übertragen, und wobei das Stellelement (60) vorzugsweise starr ausgebildet ist.

3. Bremsvorrichtung nach einem der vorhergehenden Ansprüche,
wobei das Stellelement (60) einen integralen Teil einer Kabelhülse bildet.

4. Bremsvorrichtung nach einem der vorhergehenden Ansprüche,
wobei das Stellelement (60) eine Länge aufweist, welches mindestens einem Abstand des Sensors (50) von einer Außenseite der Bremsvorrichtung (10) entspricht.

5. Bremsvorrichtung nach einem der vorhergehenden Ansprüche,
wobei das Stellelement (60) von außerhalb der Bremstrommel (20) zugänglich ist.

6. Bremsvorrichtung nach einem der vorhergehenden Ansprüche,
wobei das Stellelement (60) aus einem Innenraum der Bremstrommel (20) herausragt.

7. Bremsvorrichtung nach einem der vorhergehenden Ansprüche,
wobei das Stellelement (60) durch eine bzw. in einer Öffnung (42) einer Verschlussplatte (40) der Bremsvorrichtung (10) ragt bzw. gelagert ist.

8. Bremsvorrichtung nach einem der vorhergehenden Ansprüche,
wobei das Stellelement (60) aus Metall und/oder Kunststoff gebildet ist.

9. Bremsvorrichtung nach einem der vorhergehenden Ansprüche,
wobei das Stellelement (60) eine Längsachse aufweist, welche entlang einer Sensorlängsachse (56) verläuft.

10. Bremsvorrichtung nach einem der vorhergehenden Ansprüche,
wobei der Sensor (50) axial in eine Sensorhalterung (54) einsteckbar ist.

11. Bremsvorrichtung nach einem der vorhergehenden Ansprüche,
wobei der Sensor (50) mittels des Stellelements (60) in einer Axialrichtung verstellbar ist.

12. Bremsvorrichtung nach einem der vorhergehenden Ansprüche,
wobei das Stellelement (60), vorzugsweise im Bereich seines Endes und insbesondere im Bereich eines aus der Verschlußplatte herausragenden Teils, Indikatormittel aufweist.

## Claims

1. A brake device for braking a wheel, having
a brake drum (20),
a brake carrier (30) for shifting a brake lining (34) with respect to the brake drum (20), and
a sensor (50) for detecting a rotational speed of the wheel,
wherein an adjustment element (60) is provided which can be engaged with the sensor (50) and by means of which the sensor (50) can be shifted spatially, **characterized in that**
the adjustment element (60) is embodied in the form of a sleeve and accommodates a cable element (62) of the sensor (50),
wherein the rotationally symmetrical adjusting element runs coaxially to a sensor longitudinal axis.

2. The brake device as claimed in claim 1,
wherein the adjustment element (60) is configured to transmit a pressure force to the sensor (50), and wherein the adjustment element (60) is preferably embodied in a rigid fashion.

3. The brake device as claimed in one of the preceding claims,
wherein the adjustment element (60) forms an integral part of a cable sleeve.

4. The brake device as claimed in one of the preceding claims,
wherein the adjustment element (60) has a length which corresponds to at least a distance of the sensor (50) from an outer side of the brake device (10).

5. The brake device as claimed in one of the preceding claims,
wherein the adjustment element (60) is accessible from outside the brake drum (20).

6. The brake device as claimed in one of the preceding claims,
wherein the adjustment element (60) projects out of an interior space of the brake drum (20).

7. The brake device as claimed in one of the preceding claims,
wherein the adjustment element (60) projects through, or is mounted in, an opening (42) in a closure plate (40) of the brake device (10).

8. The brake device as claimed in one of the preceding claims,
wherein the adjustment element (60) is formed from metal and/or plastic.

9. The brake device as claimed in one of the preceding claims,
wherein the adjustment element (60) has a longitudinal axis which runs along a sensor longitudinal axis (56).

10. The brake device as claimed in one of the preceding claims,
wherein the sensor (50) can be plugged axially into a sensor mount (54).

11. The brake device as claimed in one of the preceding claims,
wherein the sensor (50) can be adjusted in an axial direction by means of the adjustment element (60).

12. The brake device as claimed in one of the preceding claims,
wherein the adjustment element (60) has indicator means, preferably in the region of its end and, in particular, in the region of a part projecting out of the closure plate.

## Revendications

1. Dispositif de freinage pour freiner une roue, comprenant
un tambour de frein (20),
un support de frein (30) pour déplacer une garniture de frein (34) par rapport au tambour de frein (20), et
un capteur (50) pour détecter une vitesse de rotation de la roue,
un élément d'actionnement (60) étant prévu, qui peut être amené en engagement avec le capteur (50) et au moyen duquel le capteur (50) peut être déplacé dans l'espace,
**caractérisé en ce que**
l'élément d'actionnement (60) est réalisé en forme de manchon et reçoit un élément de câble (62) du capteur (50),
l'élément d'actionnement à symétrie de révolution s'étendant coaxialement à un axe longitudinal du capteur.

2. Dispositif de freinage selon la revendication 1,
dans lequel
l'élément d'actionnement (60) est conçu pour transmettre une force de compression au capteur (50), l'élément d'actionnement (60) étant de préférence réalisé rigide.

3. Dispositif de freinage selon l'une des revendications précédentes,
dans lequel
l'élément d'actionnement (60) fait partie intégrante d'un manchon de câble.

4. Dispositif de freinage selon l'une des revendications précédentes,
dans lequel
l'élément d'actionnement (60) présente une longueur qui correspond au moins à une distance du capteur (50) par rapport à un côté extérieur du dispositif de freinage (10).

5. Dispositif de freinage selon l'une des revendications précédentes,
dans lequel
l'élément d'actionnement (60) est accessible de l'extérieur du tambour de frein (20).

6. Dispositif de freinage selon l'une des revendications précédentes,
dans lequel
l'élément d'actionnement (60) dépasse hors d'un volume intérieur du tambour de frein (20).

7. Dispositif de freinage selon l'une des revendications précédentes,
dans lequel
l'élément d'actionnement (60) fait saillie à travers ou est monté dans une ouverture (42) d'une plaque de fermeture (40) du dispositif de freinage (10).

8. Dispositif de freinage selon l'une des revendications précédentes,
dans lequel
l'élément d'actionnement (60) est réalisé en métal et/ou en matière plastique.

9. Dispositif de freinage selon l'une des revendications précédentes,
dans lequel
l'élément d'actionnement (60) présente un axe longitudinal qui s'étend le long d'un axe longitudinal (56) du capteur.

10. Dispositif de freinage selon l'une des revendications précédentes,
dans lequel
le capteur (50) est enfichable axialement dans un support de capteur (54).

11. Dispositif de freinage selon l'une des revendications précédentes,
dans lequel
le capteur (50) est déplaçable dans une direction axiale au moyen de l'élément d'actionnement (60).

12. Dispositif de freinage selon l'une des revendications précédentes,
dans lequel
l'élément d'actionnement (60) comprend des moyens indicateurs de préférence au niveau de son extrémité et en particulier au niveau d'une partie dépassant hors de la plaque de fermeture.
